Europäisches Patentamt

European Patent Office

Office européen des brevets

(11) Publication number: **0 289 862 B1**

## EUROPEAN PATENT SPECIFICATION

(45) Date of publication of patent specification: **30.12.92**　(51) Int. Cl.⁵: **A23P 1/08**, A23L 1/325, A23L 1/315

(21) Application number: **88106281.4**

(22) Date of filing: **20.04.88**

(54) Food product and method of preparing a food product.

(30) Priority: **28.04.87 GB 8709993**

(43) Date of publication of application:
**09.11.88 Bulletin 88/45**

(45) Publication of the grant of the patent:
**30.12.92 Bulletin 92/53**

(84) Designated Contracting States:
**BE DE ES FR GB IT NL**

(56) References cited:
EP-A- 0 181 024　　CA-A- 932 202
DE-A- 2 610 543　　FR-A- 2 248 793
US-A- 3 843 827　　US-A- 4 330 566

JOURNAL OF MICROWAVE POWER, vol. 18,
no. 4, 1983, pages 345-353, IMPI, Ottawa, CN;
L. LOPEZ-GAVITO et al.: "Effects of micro-
wave cooking on textural characteristics of
battered and breaded fish products"

Olga Hess Wiener Küche, p. 603 der Reprin-
tausgabe von 1986, 1. Ausgabe von 1913

(73) Proprietor: **SUN VALLEY POULTRY LIMITED**
**Grandstand Road**
**Hereford HR4 9BB(GB)**

(72) Inventor: **Jull, Harvey William**
**Broadmead, The Moor, Bodenham**
**Herefordshire HRI 3HT(GB)**
Inventor: **Clarke, Edward Thomas**
**Little Fromington, Sutton St.Nicholas**
**Herefordshire HRI 3BT(GB)**

(74) Representative: **Lally, William et al**
**FORRESTER & BOEHMERT Franz-**
**Joseph-Strasse 38**
**W-8000 München 40(DE)**

EP 0 289 862 B1

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

Rank Xerox (UK) Business Services

## Description

This invention is concerned with food products, particularly a saleable article of food comprising meat.

The term "meat" is used herein generically as including animal meat, fish meat, poultry meat and synthetic meat such as soya products.

A typical saleable meat product comprises a portion of meat comprising an outer layer of at least partially cooked protein. For example, a chicken breast consisting of a portion of muscle meat or compressed minced meat may be dipped in a "batter" prior to being coated [e.g. with breadcrumbs], the batter conveniently comprising egg and/or a flour/water mix. The chicken breast is flash fried, conventionally by immersing in fat heated to a temperature of about 190° C, for a period of about 30 seconds to "set" the batter thus holding the breadcrumbs in place. The coated chicken portion may then be chilled and packed to provide a saleable meat product.

Also for example, a "fish finger", consisting of a portion of fish, or a fish/potato mix, may be dipped in a batter comprising a flour or other starch/water mix or milk powder/flour/water mix prior to being coated with crumbs. The fish finger is similarly flash fried to set the batter and hold the crumbs in place.

The use of flash frying involves the use of expensive equipment, and in addition results in a saleable meat product comprising a high fat content.

According to this invention there is provided a method of preparing a food product comprising steps:

[a] providing a portion of meat with a coating which comprises edible adhesive; and

[b] subjecting the portion to a heating operation in which the adhesive is substantially "set" or cooked, and the portion of meat is cooked to a depth of between 0.5 mm and 3 mm,

the heating operation being carried out in the absence of additional fat at a dry air temperature of between 120° C and 250° C and at a relative humidity of between 55% and 98%.

The coating may be provided by a gum or by gelatine, agar-agar or guar, or maybe provided by a protein or a protein-containing material. Thus the coating may be afforded by a batter, such as a mixture of flour and water, and optionally milk and/or egg, or may be provided by subjecting the portion of meat to an operation in which natural protein [such as myacin] of the meat is brought to the surface of the portion. Such an operation may be a tumbling operation, in which the portions of meat are subjected to tumbling, conveniently being carried out in the presence of brine.

If desired the portion of meat may be subjected both to a tumbling operation, and being provided with an additional coating comprising protein, such as batter.

If desired additional coating materials, which may include breadcrumbs, cereals, cheese, flavours, herbs and spices may be applied to the coated portion, and caused to adhere to the coated portion by virtue of the inherent sticky nature of the coating.

Where the portion of meat is coated with a batter, and/or is provided with additional coating materials of aforesaid, desirably the portion of meat is cooked to a depth only of between 0.5 mm and 1 mm. Conversely where the portion of meat is subjected to a tumbling operation, and no separately applied coating is utilised, the portion is cooked only to a depth of between 1 mm and 3 mm. If desired the heating operation may be carried out in two stages, the first stage being at a relatively low temperature and relatively high humidity, such as at a temperature of between 120° C and 200° C [preferably 165° C ] at a humidity of between 75% and 95% [preferably 85%] and the second stage being at a relatively high temperature and relatively low humidity, such as between a temperature of 190° C and 250° C [preferably 220° C] and a humidity of between 55% and 75% [preferably 65%]. In this manner, during the first stage, the heating is carried out in an atmosphere with high moisture content, reducing loss of moisture from the product, whilst the second stage, carried out after the protein has "set" to an acceptable degree, removes surface moisture from the product.

Alternatively or in addition the heating operation may include subjecting the portion to microwave radiation.

Desirably the method involves, subsequent to the heating operation, chilling and packing the product to provide a saleable food product.

The method may be used in the production of a portion of meat coated with an edible adhesive, such as a batter, with primarily the coating alone being cooked, or may be used in the production of a portion of meat previously subjected to an operation by which natural protein of the meat is brought to the surface of the portion, such as by a tumbling operation. Such meat may be used as discrete portions, or the meat may be comminuted and compressed into a desired shape to provide an item of foodstuff such as a burger or fish finger, the cooking operation denaturing [coagulating] the comminuted meat to "seal" the portion of meat and to hold the meat together.

The invention will now be illustrated by way of example with reference to four examples which have been selected for the purposes of illustrating the invention.

These examples illustrate the use of an inventive technique, in which a portion of meat is provided with an adhesive layer [i.e. an edible glue] by which an outer coating is held in place, the portion being subjected to a heat process which "sets up" the adhesive layer. The heating processes takes place without the emersion of the product in frying oil, fat, water or any other liquid medium and in the total absence of additional fat. This results in a product with a much lower fat content, with clear health advantages.

## EXAMPLE 1

In the preparation of a burger, a quantity of comminuted animal meat is compressed in a forming machine into the shape of a disc at a sufficient pressure and at a sufficiently low temperature to retain the meat particles together. If desired, the adherence of the meat particles may be improved by tumbling the meat portions. The portion is dusted with a flour which may contain seasoning, and is then coated with a batter comprising reconstituted dried egg and flour. The coated portion is then covered with breadcrumbs.

The article is then subjected to a heat treating or partial cooking operation for between 1 and 1½ minutes at a temperature of about 200°C and at a water humidity of between 85% and 90%. This cooks the breadcrumbs and the layer of batter to at least partially seal the meat, and to reduce tendency for the portion of meat to break up. The item was chilled and packed.

## EXAMPLE 2

A method similar to that described in Example 1 was used in the preparation of a fish finger, a portion of flaked fish meat being similarly compressed, and dusted with flour prior to being coated with a batter comprising flour and water [and optionally milk] prior to being covered with breadcrumbs, and subjected to a partial cooking operation as described in Example 1.

## EXAMPLE 3

In the preparation of a non-coated meat portion, one or more pieces of muscle meat [e.g. turkey breast] are tumbled in the presence of brine and are treated with seasoning and flavouring and then reduced in temperature prior to being compressed to a desired shape. The portion is then subjected directly to a partial cooking operation as described in Example 1. On inspection it was seen that the meat had been cooked to a depth of between 1 and 2 mm. This tended to make the meat portion stiffer, a reduced tendency for the portion to break up, and in addition provided a seal covering substantially the whole of the surface of the portion.

## EXAMPLE 4

A chicken wing is cut into two joints, and is tumbled in brine to bring the myacin protein of the meat to the surface. The tumbled joints are coated with a flour and breadcrumb mix, the mix adhering to the surface of the joints by virtue of the inherent sticky nature of the protein on the surface of the joints, and the joints are subjected to a two stage heating operation. Stage 1 which is carried out for about two minutes, is carried out at a temperature of 165°C and a humidity of 85%, and the second stage, which is carried out for about one minute involves a temperature of 220°C and a humidity of less than 65%.

## Claims

1. A method of preparing a food product comprising the steps:
   [a] providing a portion of meat with a coating which comprises edible adhesive; and
   [b] subjecting the portion to a heating operation in which the adhesive is substantially "set" or cooked, and the portion of meat is cooked to a depth of between 0.5 mm and 3 mm,
   the heating operation being carried out in the absence of additional fat at a dry air temperature of between 120°C and 250°C and at a relative humidity of between 55% and 98%.

2. A method according to Claim 1 wherein the portion is cooked to a depth of between 1 and 2 mm.

3. A method according to one of Claims 1 and 2 where in the temperature is between 165°C and 220°C.

4. A method according to any one of the preceding claims wherein the humidity is between 75% and 90%.

5. A method according to any one of the preceding claims wherein the heating operation is carried out in two stages.

6. A method according to Claim 5 wherein the first stage involves subjecting the portion of meat to a relatively low temperature and a relatively high humidity, and the second stage involves subjecting the portion of meat to a relatively high temperature and a relatively low humidity.

7. A method according to Claim 6 wherein the first stage involves a temperature of between 120° C and 200° C at a humidity of between 75% and 95% and the second stage involves a temperature of between 190° C and 250°C and a humidity of between 55% and 75%.

8. A method according to one of Claims 5 and 6 wherein the first stage involves a temperature of 165° C and a humidity of 85% and the second stage involves a temperature of 220° C and a humidity of 65%.

9. A method according to any one of the preceding claims wherein the coating comprises one or more materials selected from the group consisting of edible gum, gelatin, agar-agar, guar and batter.

10. A method according to any one of Claims 1 to 8 wherein the coating is provided by subjecting the portion of meat to an operation in which natural protein of the meat is brought to the surface of the portion.

11. A method according to Claims 10 wherein in addition to being subjected to an operation in which natural protein is brought to the surface, the portion of meat is provided with an additional coating comprising protein.

12. A method according to any one of the preceding claims wherein additional coating materials are applied to the coating of the portion of meat.

13. A method according to any one of the preceding claims wherein the method involves, subsequent to the heating operation, chilling and packing the product to provide a saleable food product.

**Patentansprüche**

1. Verfahren zur Herstellung eines Nahrungsmittels, welches die Schritte umfaßt:
   [a] Bereitstellen einer Portion Fleisch mit einem Überzug, der eßbares Haftmittel umfaßt;
   [b] Unterwerfen der Portion unter einen Erhitzungsvorgang, in dem das Haftmittel im wesentlichen "verfestigt" oder gegart wird und die Portion Fleisch bis zu einer Tiefe von zwischen 0,5 mm und 3 mm gegart wird,

wobei der Erhitzungsvorgang in Abwesenheit von zusätzlichem Fett bei einer Trockenlufttemperatur von zwischen 120° C und 250° C und bei einer relativen Feuchte von zwischen 55% und 98% durchgeführt wird.

2. Verfahren nach Anspruch 1, dadurch gekennzeichnet, daß die Portion bis zu einer Tiefe von zwischen 1 und 2 mm gegart wird.

3. Verfahren nach einem der Ansprüche 1 und 2, dadurch gekennzeichnet, daß die Temperatur zwischen 165° C und 220° C liegt.

4. Verfahren nach einem der vorangehenden Ansprüche, dadurch gekennzeichnet, daß die Feuchte zwischen 75% und 90% liegt.

5. Verfahren nach einem der vorangehenden Ansprüche, dadurch gekennzeichnet, daß der Erhitzungsvorgang in zwei Stufen durchgeführt wird.

6. Verfahren nach Anspruch 5, dadurch gekennzeichnet, daß die erste Stufe das Unterwerfen der Portion Fleisch unter eine relativ niedrige Temperatur und eine relativ hohe Feuchte umfaßt und daß die zweite Stufe das Unterwerfen der Portion Fleisch unter eine relativ hohe Temperatur und eine relativ niedrige Feuchte umfaßt.

7. Verfahren nach Anspruch 6, dadurch gekennzeichnet, daß die erste Stufe eine Temperatur zwischen 120° C und 200° C bei einer Feuchte von zwischen 75% und 95% umfaßt und daß die zweite Stufe eine Temperatur von zwischen 190° C und 250° C und eine Feuchte von zwischen 55% und 75% umfaßt.

8. Verfahren nach einem der Ansprüche 5 und 6, dadurch gekennzeichnet, daß die erste Stufe eine Temperatur von 165° C und eine Feuchte von 85% umfaßt und daß die zweite Stufe eine Temperatur von 220° C und eine Feuchte von 65% umfaßt.

9. Verfahren nach einem der vorangehenden Ansprüche, dadurch gekennzeichnet, daß der Überzug ein oder mehrere Materialien umfaßt, die ausgewählt sind aus der Gruppe, die aus eßbarem Gummi, Gelatine, Agar-Agar, Guar und Tunke besteht.

10. Verfahren nach einem der Ansprüche 1 bis 8, dadurch gekennzeichnet, daß der Überzug zur Verfügung gestellt, indem die Portion Fleisch einem Vorgang unterworfen wird, in dem natürliches Protein des Fleisches an die Oberfläche der Portion gebracht wird.

11. Verfahren nach Anspruch 10, dadurch gekennzeichnet, daß die Portion Fleisch zusätzlich dazu, daß sie einem Vorgang unterworfen wird, in dem natürliches Protein an die Oberfläche Protein umfaßt.

12. Verfahren nach einem der vorangehenden Ansprüche, dadurch gekennzeichnet, daß zusätzliche Überzugsmaterialien auf den Überzug der Portion Fleisch aufgebracht werden.

13. Verfahren nach einem der vorangehenden Ansprüche, dadurch gekennzeichnet, daß das Verfahren nach dem Erhitzungsvorgang Abkühlen und Verpacken des Produktes umfaßt, um ein verkäufliches Nahrungsmittel bereitzustellen.

**Revendications**

1. Procédé de préparation d'une denrée alimentaire comprenant les étapes consistant à :
   [a] doter une portion de viande d'un enrobage comprenant un adhésif comestible ; et
   [b] soumettre la portion à une opération de chauffage au cours de laquelle l'adhésif est sensiblement "durci" ou cuit et la portion de viande est cuite jusqu'à une profondeur comprise entre 0,5 mm et 3 mm,
   l'opération de chauffage étant opérée en l'absence de matières grasses additionnelles à une température d'air sec comprise entre 120°C et 250°C et à une humidité relative comprise entre 55 % et 98 %.

2. Procédé selon la revendication 1, dans lequel la portion est cuite jusqu'à une profondeur comprise entre 1 et 2 mm.

3. Procédé selon l'une des revendications 1 ou 2, dans lequel la température est comprise entre 165°C et 220°C.

4. Procédé selon l'une quelconque des revendications précédentes, dans lequel l'humidité est comprise entre 75% et 90%.

5. Procédé selon l'une quelconque des revendications précédentes, dans lequel l'opération de chauffage est opérée en deux temps.

6. Procédé selon la revendication 5, dans lequel le premier temps comprend la soumission de la portion de viande à une température relativement faible et à une humidité relativement élevée et le second temps implique la soumission de la portion de viande à une température relativement élevée et à une humidité relativement faible.

7. Procédé selon la revendication 6, dans lequel le premier temps implique une température comprise entre 120°C et 200°C à une humidité comprise entre 75% et 95% et le second temps implique une température comprise entre 190°C et 250°C et une humidité comprise entre 55% et 75%.

8. Procédé selon l'une des revendications 5 et 6, dans lequel le premier temps implique une température de 165°C et une humidité de 85% et le second temps implique une température de 220°C et une humidité de 65%.

9. Procédé selon l'une quelconque des revendications précédentes, dans lequel l'enrobage comprend une ou plusieurs substances sélectionnées dans le groupe constitué par une gomme comestible, de la gélatine, de l'agar-agar, du guar et une pâte.

10. Procédé selon l'une quelconque des revendications 1 à 8, dans lequel l'enrobage est fourni par soumission de la portion de viande à une opération au cours de laquelle la protéine naturelle de la viande est amenée à la surface de la portion.

11. Procédé selon la revendication 10, dans lequel, en plus d'être soumise à une opération au cours de laquelle la protéine naturelle est amenée à la surface, la portion de viande est dotée d'un enrobage additionnel comprenant la protéine.

12. Procédé selon l'une quelconque des revendications précédentes, dans lequel les substances d'enrobage additionnelles sont appliquées sur l'enrobage de la portion de viande.

13. Procédé selon l'une quelconque des revendications précédentes, dans lequel le procédé implique, après l'opération de chauffage, la réfrigération et l'emballage du produit pour fournir une denrée alimentaire commercialisable.